## Europäisches Patentamt

## European Patent Office

## Office européen des brevets

(19)

(11) Veröffentlichungsnummer: **0 173 062**
**A2**

(12) **EUROPÄISCHE PATENTANMELDUNG**

(21) Anmeldenummer: **85109000.1**

(22) Anmeldetag: **18.07.85**

(51) Int. Cl.⁴: **G 01 N 27/12**

(30) Priorität: **30.07.84 DE 3428021**

(43) Veröffentlichungstag der Anmeldung: **05.03.86**
**Patentblatt 86/10**

(84) Benannte Vertragsstaaten: **AT BE CH DE IT LI NL SE**

(71) Anmelder: **Siemens Aktiengesellschaft, Berlin und München Wittelsbacherplatz 2, D-8000 München 2 (DE)**

(72) Erfinder: **Frühauf, Waldemar, Dr., Clausewitzstrasse 34, D-8500 Nürnberg (DE)**
Erfinder: **Seibert, Rudolf, Ansgarstrasse 8, D-8500 Nürnberg 50 (DE)**

(54) **Feuchtemelder.**

(57) Die Erfindung betrifft einen Feuchtmelder mit einem Feuchtesensor (1), der mit einer Wechselstromquelle (2) verbunden ist. Die am Feuchtesensor (1) abfallende Spannung wird einer Auswerteschaltung für unipolare Signale zugeführt. Diese Auswerteschaltung wird ebenfalls mit Wechselstrom versorgt. Damit erfolgt zwar nur bei jeder zweiten Halbwelle des Wechselstroms eine Auswertung, was jedoch völlig ausreicht. Mit einer einfachen Transistorschaltung als Auswerteschaltung kann sowohl eine Unterbrechung der Verbindung zwischen Feuchtesensor und Auswerteeinrichtung als auch ein Ansprechen des Feuchtesensors erreicht werden.

EP 0 173 062 A2

Siemens Aktiengesellschaft        Unser Zeichen
Berlin und München                VPA **84 P 3 2 88 E**

Feuchtemelder

Die Erfindung betrifft einen Feuchtemelder mit einem Feuchtesensor, der mit einer Stromquelle verbunden ist, wobei die am Feuchtesensor abfallende Spannung einer Auswerteschaltung für unipolare Signale zugeführt ist.

Derartige Feuchtemelder sind im Handel erhältlich und werden ausschließlich mit Gleichstrom betrieben, da die mit Halbleitern bestückte Auswerteschaltung für Gleichstromsignale am einfachsten aufzubauen ist. Der Gleichstrom führt jedoch zur Bildung von Sauerstoff an der Anode und von Wasserstoff an der Kathode des Feuchtesensors. An der Anode kann es dabei insbesondere nach längerem Betrieb zu Korrosionserscheinungen kommen. Die am Feuchtesensor anliegende Spannung muß höher als die Polarisationsspannung gewählt werden. Ansonsten würde zwar beim Eintauchen des Sensors in Wasser dessen Leitfähigkeit zunächst deutlich zunehmen. Sobald sich die Polarisationsspannung aufbaut würde jedoch die Leitfähigkeit wieder kleiner werden, und zwar mit einer Zeitkonstante von ca. 10 bis 15 Sek.

Aufgabe der Erfindung ist es daher, einen Feuchtemelder so aufzubauen, daß ohne Erhöhung des Aufwands für die Auswerteschaltung die nachteiligen, durch die elektrolytische Zersetzung des Wassers bedingten Effekte, nicht auftreten.

Diese Aufgabe wird erfindungsgemäß dadurch gelöst, daß der Feuchtesensor und die Auswerteschaltung mit Wechselstrom versorgt werden. Damit tritt keine Elektrolyse und somit auch keine Gasbildung und Korrosion auf.

Sid 2 Ste / 27.07.1984 Ferner ist auch keine Polarisationsspannung zu überwinden, so daß ein im Wasser liegender Feuchtesensor
einen weitgehend konstanten Widerstand aufweist. Es hat
sich herausgestellt, daß man trotz der Verwendung von
Wechselstrom mit einer einfach zu realisierenden Auswerteschaltung für unipolare Signale auskommt und diese
auch mit Wechselstrom betreiben kann. Da die Auswerteschaltung nur bei jeder zweiten Halbwelle funktionsfähig ist, wird auch nur jede zweite Halbwelle der
Signalspannung ausgewertet. Dies ist jedoch für die
Erfassung völlig ausreichend.

Vorteilhafterweise ist zur Spannungsversorgung von
Feuchtesensor und Auswerteschaltung eine Wechselspannung
über einen Widerstand mit zwei in Serie gegeneinander
geschalteten Z-Dioden verbunden, wobei an dieser Serienschaltung die Versorgungsspannung abgegriffen wird.
Damit erfolgt eine Begrenzung der Versorgungsspannung
auf einen definierten Wert, so daß Schwellwerte der
Auswerteschaltung von Spannungsschwankungen unabhängig
werden.

Vorteilhafterweise enthält der Feuchtesensor parallel
zu einer Elektrodenanordnung einen Widerstand wobei der
Feuchtesensor über einen Widerstand mit einer Versorgungsspannung verbunden ist, wobei die am Feuchtesensor
anstehende Spannung der Basis eines ersten Transistors
in Emitterschaltung und über eine Diode der Basis eines
zweiten Transistors in Emitterschaltung zugeführt ist,
wobei der Kollektor des ersten Transistors über einen
Widerstand mit der Basis des zweiten Transistors verbunden ist, wobei am Kollektor des zweiten Transistors
die Ausgangsspannung der Schaltung abgegriffen wird und
wobei die Widerstände so dimensioniert sind, daß der zweite Transistor sowohl bei Ansprechen des Feuchtesensors als auch bei Unterbrechung der Vrbindungsleitung zum Feuchtesensor leitend wird.

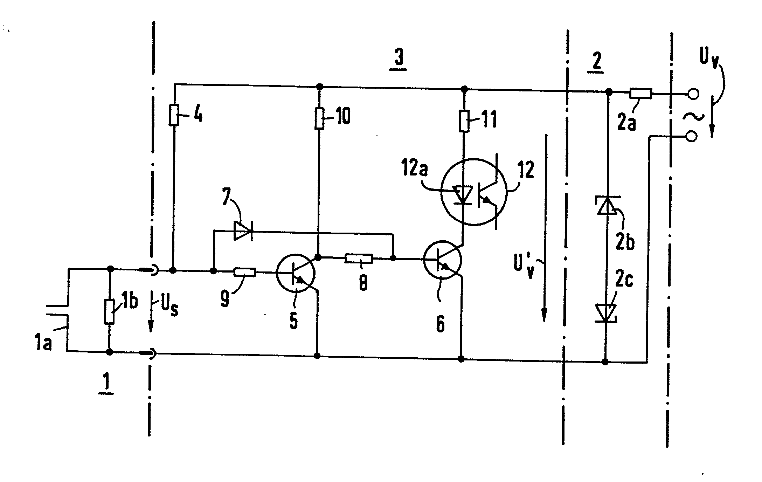

Ein Ausführungsbeispiel der Erfindung wird nachfolgend anhand der Figur näher erläutert:

Zur Stromversorgung der Anordnung ist eine Begrenzungsschaltung 2 vorgesehen, die die Reihenschaltung eines Widerstands 2a und zweier Z-Dioden 2b und 2c mit entgegengesetzter Leitrichtung enthält. Diese Reihenschaltung ist an eine Wechselspannungsquelle mit der Spannung $U_v$ angeschlossen. An der Reihenschaltung der Z-Dioden 2b und 2c, deren Anschlüsse den Ausgang des Begrenzungsglieds 2 darstellen, steht damit eine Wechselspannung $U_v'$ an, deren Amplitude auf die Zenerspannung der Z-Dioden 2b bzw. 2c begrenzt ist.

An die Begrenzungsschaltung 2 ist ausgangsseitig die Reihenschaltung eines Widerstands 4 und eines Feuchtesensors 1 angeschlossen, wobei im Feuchtesensor 1 parallel zu einer Elektrodenstrecke 1a ein Widerstand 1b liegt. Am Feuchtesensor 1 steht also im trockenen Zustand eine Spannung an, deren Höhe durch das Spannungsteilerverhältnis der Widerstände 1b und 4 bestimmt ist. Sobald auf den Feuchtesensor 1 Feuchtigkeit einwirkt, wird die anstehende Spannung kleiner. Dies soll mit einer noch zu erläuternden Auswerteschaltung 3 erfaßt werden. Die Auswerteschaltung 3 soll aber auch dann ansprechen, wenn zwischen dem Feuchtesensor 1 und der Auswerteschaltung 3 eine Unterbrechung, z.B. ein Drahtbruch vorliegt. In diesem Fall weist der Widerstand 4 einen verringerten Spannungsabfall auf, so daß die Eingangsspannung der Auswerteschaltung ansteigt.

Die Auswerteschaltung soll also sowohl einen Anstieg ihrer Eingangsspannung über den Normalwert als auch ein Absinken unter den Normalwert bei trockenem Feuchtesensor erfassen. Dies wird mit der nachfolgend beschriebenen Auswerteschaltung 3 erreicht. An die Begrenzungsschaltung 2 ist ausgangsseitig die Reihenschaltung eines Widerstands 10 und eines ersten Transistors 5 und außerdem die Reihenschaltung eines Widerstands 11, der Diode 12a eines Optokopplers 12 und eines zweiten Transistors 6 angeschlossen. Dabei sind die Emitter der Transistoren 5 und 6 jeweils direkt mit der Begrenzungsschaltung 2 verbunden. Die am Verbindungspunkt von Widerstand 4 und Feuchtesensor 1 abgegriffene, am Feuchtesensor 1 anstehende Spannung wird über einen Widerstand 9 der Basis des ersten Transistors 5 und über eine Diode 7 der Basis des zweiten Transistors 6 zugeführt. Dabei ist die Kathode der Diode 7 mit der Basis des zweiten Transistors 6 verbunden. Ferner besteht über einen Widerstand 8 eine Verbindung zwischen dem Kollektor des ersten Transistors 5 und der Basis des zweiten Transistors 6. Am Verbindungspunkt von Widerstand 11 und zweitem Transistor 6 steht das Ausgangssignal der Auswerteschaltung 3 an. Der aus den Widerständen 1b und 4 gebildete Spannungsteiler ist so dimensioniert, daß im Normalbetrieb, d.h. bei trockenem Feuchtesensor und intakter Verbindung zur Auswerteschaltung am Feuchtesensor eine Spannung von ca. 0,9 V ansteht. Damit wird über den Widerstand 9 der erste Transistor 5 durchgeschaltet. Dagegen reicht die Eingangsspannung nicht aus, über die Diode 7 den Transistor 6 durchzusteuern, da die Summe der Schwellwerte von Diode 7 und Transistor 6 höher als 0,9 V ist. Da der erste Transistor 5 durchgeschaltet ist, ist auch keine Ansteuerung des zweiten Transistors 6 über die Widerstände 10 und 8 möglich. Damit wird auch der Optokoppler 12 nicht angesteuert.

0173062

Wenn jedoch die Verbindung zwischen der Auswerteschaltung 3 und dem Feuchtesensor 1 unterbrochen ist, so steigt die Eingangsspannung der Auswerteschaltung 3 soweit an, daß über die Diode 7 der zweite Transistor 6 und damit auch der Optokoppler 12 durchgesteuert wird. Der erste Transistor 5 ist zwar ebenfalls durchgesteuert, der Widerstand 8 ist jedoch im Verhältnis zum Widerstand 4 so dimensioniert, daß der zweite Transistor 6 trotz des durchgeschalteten ersten Transistors 5 eine ausreichende Basisspannung erhält.

Wenn sich zwischen den Elektroden des Feuchtesensors 1 eine elektrisch leitende Flüssigkeit befindet, so sinkt die Eingangsspannung der Auswerteschaltung 3 unter die Schwellenspannung für die Ansteuerung des Transistors 5. Damit sperrt dieser und über die Widerstände 10 und 8 wird der zweite Transistor 6 angesteuert.

Im Störungsfall, d.h. entweder bei Ansprechen des Feuchtesensors oder bei Unterbrechung der Verbindung zwischen Feuchtesensor und Auswerteschaltung wird also stets der zweite Transistor 6 leitend, so daß über den Optokoppler 12 eine Meldung gegeben wird. Die Schaltung funktoniert zwar immer nur bei den positiven Halbwellen der anstehenden Versorgungsspannung $U_v'$, bei negativen Halbwellen spricht der Optokoppler 12 nicht an. Dies reicht jedoch zur Störungserfassung vollkommen aus, so daß man trotz der Beaufschlagung des Feuchtesensors mit Wechselspannung unter Erzielung der bereits genannten Vorteile mit einer einfachen Transistorschaltung für nur eine Stromrichtung auskommt.

3 Patentansprüche
1 Figuren

Patentansprüche

1. Feuchtemelder mit einem Feuchtesensor (1), der mit einer Stromquelle verbunden ist, wobei die am Feuchtesensor (1) abfallende Spannung ($U_S$) einer Auswerteschaltung (3) für unipolare Signale zugeführt ist, d a d u r c h   g e k e n n z e i c h n e t , daß der Feuchtesensor (1) und die Auswerteschaltung (3) mit Wechselstrom versorgt werden.

2. Feuchtemelder nach Anspruch 1, d a d u r c h   g e k e n n z e i c h n e t , daß zur Spannungsversorgung von Feuchtesensor (1) und Auswerteschaltung (3) eine Wechselspannung ($U_V$) über einen Widerstand (2a) mit zwei in Serie gegeneinander geschalteten Z-Dioden (2b, 2c) verbunden ist und daß an dieser Serienschaltung die Versorgungsspannung ($U_V'$) abgegriffen wird.

3. Feuchtemelder nach Anspruch 1 oder 2, d a d u r c h   g e k e n n z e i c h n e t , daß der Feuchtesensor parallel zu einer Elektrodenanordnung (1a) einen Widerstand (1b) enthält, daß der Feuchtesensor (1) über einen Widerstand (4) mit einer Versorgungsspannung ($U_V'$) verbunden ist, daß die am Feuchtesensor (1) anstehende Spannung der Basis eines ersten Transistors (5) in Emitterschaltung und über eine Diode (7) der Basis eines zweiten Transistors (6) in Emitterschaltung zugeführt ist, daß der Kollektor des ersten Transistors (5) über einen Widerstand (8) mit der Basis des zweiten Transistors (6) verbunden ist, daß am Kollektor des zweiten Transistors (6) die Ausgangsspannung der Schaltung abgegriffen wird und daß die Widerstände so dimensioniert sind, daß der zweite Tran-

Sid 2 Ste / 27.07.1984

sistor (6) sowohl bei Ansprechen des Feuchtesensors (1)
als auch bei Unterbrechung der Verbindungsleitung zum
Feuchtesensor leitend wird.